Europäisches Patentamt

European Patent Office

Office européen des brevets

(11) Veröffentlichungsnummer: **0 463 185 A1**

# EUROPÄISCHE PATENTANMELDUNG

(21) Anmeldenummer: **90106988.0**

(51) Int. Cl.5: **A01K 97/12**

(22) Anmeldetag: **22.06.90**

(43) Veröffentlichungstag der Anmeldung:
**02.01.92 Patentblatt 92/01**

(84) Benannte Vertragsstaaten:
**DE FR GB NL**

(71) Anmelder: **Sodatronik GmbH**
**Andechser Strasse 15**
**W-8138 Erling-Andechs(DE)**

(72) Erfinder: **Sooth, Jürgen**
**Alpspitzstrasse 8**
**W-8031 Eichenau(DE)**

(54) **Elektronisches Bissanzeigersystem für Angler.**

(57) Elektronisches Bißanzeigersystem für Angler, bestehend aus einem oder mehreren Funkfernwirksendern und einem dazugehörigen Empfängergerät. Durch die Bewegung der Angelschnur beim Anbiß des Fisches wird ein Funksender aktiviert, welcher ein Signal aussendet das von dem zugehörigen Funkempfänger empfangen wird.

Der Funkempfänger beinhaltet zusätzlich eine Signalelektronik, die durch den Signalempfang aktiviert wird und dadurch ein optisches und akustisches Signal abgibt.

EP 0 463 185 A1

Die Erfindung betrifft ein elektronisches Bißanzeigersystem für Sportangler. Es sind eine Vielzahl mechanischer und elektronischer Bißanzeiger bekannt, welche in der Regel die Bewegung der Angelschnur beim Anbiß des Fisches und die damit auf die Angelschnur wirkende Zugkraft dazu verwenden, einen elektrischen Kontakt zu betätigen, welcher wiederum eine angeschlossene elektronische Schaltung aktiviert, wodurch es zur akustischen und/oder optischen Bißanzeige kommt.

Zur Unterscheidung mehrerer Geräte kann z.B. bei einigen bekannten Geräten die Lautstärke bzw. die Tonfrequenz verändert werden.

Alle bis heute bekannten elektronischen und mechanischen Bißanzeiger erfordern jedoch ständig die unmittelbare Anwesenheit des Anglers am Gerät, da sonst der Alarm nicht mehr wahrgenommen wird.

Aufgabe der Erfindung ist es, ein Bißanzeigersystem zu schaffen, welches dem Angler auch nach Entfernen von seinem Angelplatz einen ständigen Kontakt zu seinen Angelruten ermöglicht und dadurch auch eine ständige Überwachung der Angeln gewährleistet ist. Dies ist insbesondere auch dann erforderlich, wenn der Sportangler mehrere Angeln an verschiedenen Orten einsetzt.

Erfindungsgemäß wird diese Aufgabe dadurch gelöst, daß in einem normalen Bißanzeiger - wie z.B. in der Patent-Anmeldung Nr. 88 100018.6 beschrieben - eine Fernwirk-Funkanlage kleiner Leistung integriert ist, welche nach dem Schließen des Kontaktes, welcher wie vorher geschildert durch die Zugkraft an der Angelschnur betätigt wird, einen Impuls aussendet.

Dieser Impuls wird von einem Funkempfänger, den der Angler unmittelbar bei sich trägt, empfangen. Eine im Funkempfänger integrierte Signalschaltung löst optischen und akustischen Alarm aus.

Um dem Angler die gleichzeitige Verwendung mehrerer Geräte zu ermöglichen, werden jedem Empfängergerät mehrere Bißanzeiger mit entsprechend codiertem Funksinal zugeordnet. Der Empfänger erkennt dadurch nur die ihm zugeordneten Signale, da er auf diese Codierung geeicht ist. Dadurch wird gleichzeitig verhindert, daß sich mehrere evtl. in einer Reichweite befindliche Gerätegruppen gegenseitig beeinflussen. Anhand der beigefügten Zeichnung mit Blockschaltplan wird ein Ausführungsbeispiel eines erfindungsgemäßen Bißanzeiger-Systems beschrieben.

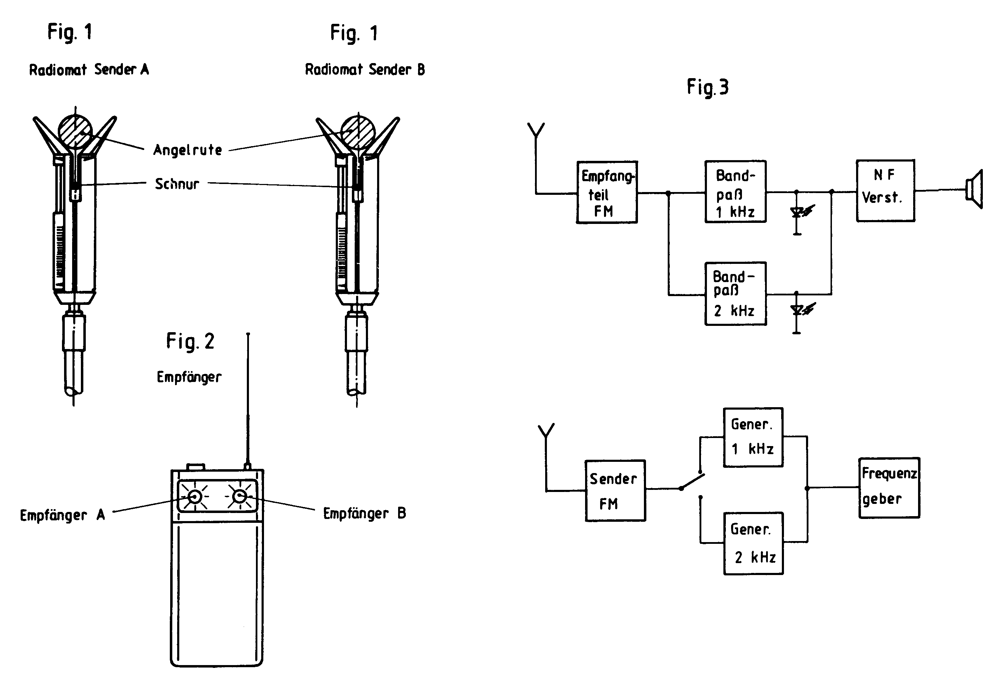

Fig.1 zeigt ein Gehäuse für den Sender. Die Angelrute wird in die Gehäusegabel gelegt. Bei Bewegung der Angelschnur wird ein Kontakt betätigt, welcher die Senderelektronik einschaltet. Diese sendet ein Signal aus.

Fig.2 zeigt das Empfängergehäuse. Dieses beinhaltet je eine Leuchtanzeige für die zugehörigen Sender. Wird ein Signal empfangen, leuchtet die entsprechende Leuchtanzeige auf und der Angler weiß, welche Angelrute den Alarm auslöste.

Fig.3 zeigt den Blockschaltplan des kpl. Bißanzeigersystems.

**Patentansprüche**

1. Elektronisches Bißanzeigersystem für Angler, **dadurch gekennzeichnet, daß** durch den Anbiß des Fisches und der damit verbundenen Schnurbewegung ein Funk-Sender aktiviert wird, welcher ein Signal aussendet, das von einem Funkempfänger empfangen wird und der Funkempfänger optischen und akustischen Alarm auslöst.

2. Elektronisches Bißanzeigersystem für Angler nach Anspruch 1 **dadurch gekennzeichnet,** daß der Funkempfänger verschiedene Funksignale decodieren kann und dadurch in der Lage ist, mehrere Signale gleichzeitig zu empfangen.

3. Elektronisches Bißanzeigersystem für Angler, **dadurch gekennzeichnet, daß** der Funkempfänger durch getrennte Anzeigen den Sender anzeigt.

4. Elektronisches Bißanzeigersystem für Angler, **dadurch gekennzeichnet, daß** der Sender und Empfänger auch mittels Ultraschall und/oder Infrarotfrequenz die Signale übertragen kann.

5. Elektronisches Bißanzeigersystem für Angler, **dadurch gekennzeichnet, daß** der Sender mit einer Zusatzelektronik ausgerüstet sein kann, welche eine direkte Bißanzeige auch ohne Empfängerteil ermöglicht.

Fig. 1

Radiomat Sender A

Radiomat Sender B

Angelrute

Schnur

Fig. 2

Empfänger

Empfänger A

Empfänger B

Fig.3

Empfangteil
FM

Bandpaß
1 kHz

Bandpaß
2 kHz

N F
Verst.

Frequenz
geber

Gener.
1 kHz

Gener.
2 kHz

Sender
FM

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 516 348 (HIROSE)<br>* das ganze Dokument *<br>– – – | 1,2,3 | A 01 K 97/12 |
| X | US-A-4 625 446 (MORIMOTO)<br>* das ganze Dokument *<br>– – – | 1,4 | |
| X | US-A-4 658 531 (MORIMOTO)<br>* das ganze Dokument *<br>– – – | 1,4 | |
| X | US-A-4 437 255 (REED)<br>* das ganze Dokument *<br>– – – – – | 1 | |

**RECHERCHIERTE SACHGEBIETE (Int. Cl.5)**

A 01 K

Der vorliegende Recherchenbericht wurde für alle Patentansprüche erstellt

| Recherchenort | Abschlußdatum der Recherche | Prüfer |
|---|---|---|
| Den Haag | 26 November 90 | VERDOODT S.J.M. |